# EUROPÄISCHE PATENTSCHRIFT

(11) **EP 2 216 773 B1**
(45) Veröffentlichungstag und Bekanntmachung des Hinweises auf die Patenterteilung: **20.08.2014**
(21) Anmeldenummer: 09153879.3
(22) Anmeldetag: 27.02.2009
(51) Int. Cl.: G10K 11/172, B23B 39/00, B23B 39/16

(54) **Verfahren zum Herstellen eines schallabsorbierenden Paneels**
Method for producing a sound-absorbing panel
Procédé de fabrication d'un panneau absorbant le son

(30) Priorität: 04.02.2009 DE 202009001318 U
(43) Veröffentlichungstag der Anmeldung: 11.08.2010
(73) Patentinhaber: Eichhorn GmbH & Co. KG, 63607 Wächtersbach (DE)
(72) Erfinder: Eichhorn, Adrian, 63607 Wächtersbach (DE)
(74) Vertreter: Cohausz & Florack

(56) Entgegenhaltungen:
- EP-A1- 0 718 074
- EP-A2- 0 875 346
- EP-A2- 1 020 846
- WO-A2-97/05986
- WO-A2-2009/021498
- DE-U1-202004 018 241
- GB-A- 140 270
- US-A- 1 660 353
- US-A- 3 770 560
- US-A- 4 123 190
- US-A- 5 422 446
- INSTITUT FÜR WERKZEUGMASCHINEN UND BETRIEBSWISSENSCHAFTEN ET AL: "Skriptum Werkzeugmaschinen Teil 1", 19910101, 1 January 1991 (1991-01-01), pages 6-13, XP007921506,

## Beschreibung

Die Erfindung betrifft ein Verfahren zum Herstellen eines schallabsorbierenden Paneels, bei dem nacheinander die folgenden Schritte durchgeführt werden: Bereitstellen einer Platte, Auflegen der Platte auf einen Tisch, und Durchführen eines ersten Bohrvorganges umfassend das Bewegen des Tisches mit der Platte hin zu einem Bohrerfeld mit einer Vielzahl von Bohrern, während zumindest ein Teil der Bohrer eines ersten Durchmessers rotiert, wobei der Tisch vertikal unterhalb des Bohrerfeldes angeordnet ist.

Ein entsprechendes Verfahren zur Herstellung eines schallabsorbierenden Paneels ist der WO 97/05986 A2 zu entnehmen.

Um bei der Vielzahl unterschiedlich genutzter Räume jeweils optimale und auf die Nutzung abgestimmte Hörbedingungen zu schaffen, werden zunehmend bauliche Maßnahmen zur Verbesserung der Raumakustik ergriffen. Im Wesentlichen dienen diese Maßnahmen der Lärmminderung sowie der Verbesserung der Sprachverständlichkeit in den jeweiligen Räumen. Erforderlich hierfür sind eine Verringerung des Schalldruckpegels und eine Verkürzung der Nachhallzeit.

Dies wird in der Praxis durch den Einbau technischer Schallabsorber bzw. schallabsorbierender Paneele erreicht. Der Begriff Paneel umfasst im Sinne der vorliegenden Erfindung jegliche Form von plattenförmigen Werkstoffen, insbesondere Holzwerkstoffplatten, die einlagig oder mehrlagig aufgebaut und beschichtet oder unbeschichtet sein können. Ein Paneel in diesem Sinne kann beispielsweise eine Front, ein Segel, eine Verbundplatte, eine Verkleidung, eine Rückwand, ein Korpus, eine Wand- oder Deckenverkleidung oder dergleichen sein. Insbesondere kann ein solches Paneel auf einer oder auf beiden Seiten eine Beschichtung beispielsweise in Form einer Dekorschicht, eines Schichtstoffs, einer Lackierung oder dergleichen aufweisen, welche auch farblich gestaltet sein kann. Bekannt und somit Stand der Technik sind dabei in Aufbau und Materialität unterschiedliche Produkte, deren schalldämpfende (schallabsorbierende) Wirkung jedoch immer auf einige grundlegende physikalische Prinzipien zurückzuführen ist.

Größere Weiterentwicklungen auf diesem Gebiet sind daher kaum mehr durch Beeinflussung der Wirkungsweisen der Produkte zu erzielen, sondern liegen im Schwerpunkt zunehmend auf der Optimierung der Herstellungsprozesse sowie einer Vergrößerung der optischen Vielfalt.

Ein schallabsorbierendes Paneel weist in einer einfachen Ausführungsform auf einer seiner Seiten eine Vielzahl von Löchern oder Schlitzen eines relativ kleinen Durchmessers auf. Durch diese Öffnungen dringt der Schall in das Innere des Paneels ein, welches Innere von mit den relativ kleinen Löchern verbundenen relativ großen Hohlräumen gebildet werden kann. In Abhängigkeit von Einbausituation und gewünschtem Absorptionsverhalten kann die Rückseite und die innere Struktur des Paneels in unterschiedlichen Varianten ausgestaltet sein.

Ein schallabsorbierendes Paneel kann aus einer homogenen Holzstruktur bestehen. Diese Holzstruktur kann einlagig sein. Ein schallabsorbierendes Paneel kann aber auch aus einem mehrlagigen Aufbau bestehen. Insbesondere kann ein Paneel aus zwei Lagen oder drei Lagen bestehen. Eine Lage eines solchen Paneels kann aus einer massiven oder furnierten Holzschicht bestehen. Eine Lage kann aber auch aus einer Deckschicht bestehen, welche aus auf beliebiger Weise aufgetragenem Kunststoffmaterial oder einer Folienschicht bestehen kann. Die Sichtseite des Paneels kann durch eine einzelne Lage gebildet werden. Die Vielzahl von Löchern oder Schlitzen eines relativ kleinen Durchmessers kann sich in einer einzelnen Lage des Paneels befinden.

Ein schallabsorbierendes Paneel kann flach sein. Ein schallabsorbierendes Paneel kann aber auch konkav oder konvex gebogen sein.

Bei der Herstellung des Aufbaus der gegenständlichen Paneele kann eine Lage auf eine Trägerplatte durch Verkleben aufgebracht werden. Vor dem Verkleben kann die Lage einerseits und die Trägerplatte andererseits mit den entsprechenden Löchern bzw. Ausnehmungen versehen werden. Nach dem Aufbringen der Lage auf die Trägerplatte können aus den zuvor in der Trägerplatte vorgesehenen Ausnehmungen die genannten, die Schallabsorption begünstigenden Hohlräume entstehen.

Das Einbringen von Löchern in die Lage sowie das Einbringen der Ausnehmungen in die Trägerplatte ist relativ aufwendig. Das Einbringen der Löcher bzw. Ausnehmungen wird, in der Regel automatisiert, mittels einer Vorrichtung bewerkstelligt, in die die jeweilige zu bearbeitende Platte, das heißt die Trägerplatte einerseits und die Lage andererseits, eingespannt wird und die über einen Bohrer verfügt, der zum Herstellen eines jeden Loches erneut abgesenkt werden muss. Es ist auch bekannt, mehrere Bohrer in einer Reihe bzw. in einem Feld anzuordnen und diese gleichzeitig abzusenken, so dass in der jeweiligen Platte mit einem einzigen Bohrhub mehrere Löcher hergestellt werden. Um eine ganze Platte mit Löchern zu versehen, muss dieser Vorgang mehrfach wiederholt werden.

Aus den vorangehend beschriebenen Gründen ist die Herstellung eines derartigen schallabsorbierenden Paneels bisher relativ aufwendig und damit zeit- und kostenintensiv.

Zudem lassen sich seriell marktfähige Produkte zur Zeit nur mit homogenen Lochbildern erstellen. Dem steht der Wunsch entgegen, auf die zunehmende Verbreitung akustisch wirksamer Oberflächen mit einer stärkeren Individualisierung dieser Produkte zu reagieren.

Aus der WO 97/05986 A2, die als nächstliegender Stand der Technik angesehen werden kann, ist ein Verfahren und eine entsprechende Vorrichtung zur Bearbeitung eines plattenförmigen Werkstücks bekannt, wobei zunächst eine Platte bereitgestellt wird, diese Platte auf einen Tisch aufgelegt wird und daraufhin ein Bohrvorgang durchgeführt wird, bei dem ein Bohrerfeld mit einer Vielzahl von Bohrern vertikal nach unten in Richtung des Tisches und der Platte bewegt wird, während zumindest ein Teil der Bohrer rotiert, wobei das Bohrerfeld so weit in Richtung der Platte bewegt wird, dass die rotierenden Bohrer die Platte zumindest teilweise durchdringen. Das Bohrerfeld ist dazu in einer Richtung senkrecht zur Ebene des Tisches bewegbar.

Auch bei dem aus der EP 1 020 846 A2, US 1,660,353, US 3,770,560 und EP 0 875 346 A2 bekannten Stand der Technik werden Bohrer in Richtung des Tisches und dem darauf befindlichen Werkstück bewegt.

Aus der US 4,123,190 ist eine Vorrichtung bekannt, bei der beim Bohren von Wellplatten ein beweglicher Tisch und stationäre Bohrer verwendet werden.

Aus der GB 140,270 A ist eine Vorrichtung mit einem Tisch zur Aufnahme einer Platte und mit einem einzelnen stationären Bohrer bekannt, wobei der Tisch in Richtung des Bohrers bewegt werden kann. Der Tisch ist ferner in einer zweiten Richtung senkrecht zur ersten Richtung relativ zum Bohrer bewegbar.

Es ist eine Aufgabe der vorliegenden Erfindung, ein schallabsorbierendes Paneel auf einfachere Weise herzustellen.

Die zuvor hergeleitete und aufgezeigte Aufgabe wird erfindungsgemäß gelöst durch ein Verfahren mit den Merkmalen von Patentanspruch 1. Die Aufgabe wird also gelöst durch ein Verfahren zum Herstellen eines schallabsorbierenden Paneels, bei dem nacheinander die folgenden Schritte durchgeführt werden: Bereitstellen einer einlagigen oder mehrlagigen Platte, insbesondere einer Trägerplatte, vorzugsweise einer Holzwerkstoffplatte; Auflegen der Platte auf einen Tisch; Durchführen eines ersten Bohrvorganges umfassend das Bewegen des Tisches mit der Platte relativ zu einem Bohrerfeld mit einer Vielzahl von Bohrern, während zumindest ein Teil der Bohrer eines ersten Durchmessers rotiert, wobei der Tisch vertikal unterhalb des Bohrerfeldes angeordnet ist, wobei die Platte so weit in Richtung des Bohrerfeldes bewegt wird, dass die zumindest teilweise rotierenden Bohrer des ersten Durchmessers die Platte zumindest teilweise durchdringen während das Bohrerfeld stationär bleibt; ggf. Wenden der Platte und Auflegen auf den Tisch, wobei die mindestens teilweise durchbohrte Seite der Platte vorzugsweise auf der vom Bohrerfeld abgewandten Seite angeordnet ist, und Durchführen eines zweiten Bohrvorganges umfassend das Bewegen des Tisches mit der Platte relativ zum Bohrerfeld, während zumindest ein Teil der Bohrer eines zweiten Durchmessers, der vorzugsweise größer als der erste Durchmesser ist, rotiert, wobei die Platte so weit in Richtung des Bohrerfeldes bewegt wird, dass die zumindest teilweise rotierenden Bohrer des zweiten Durchmessers die Platte zumindest teilweise durchdringen. In dem Fall, dass die Platte zwischen den Bohrvorgängen gewendet wird, ist vorgesehen, dass die zumindest teilweise rotierenden Bohrer des zweiten Durchmessers die Platte zumindest soweit durchdringen, dass eine Verbindung zu den Bohrungen des ersten Durchmessers entsteht, wobei die Eindringtiefe der rotierenden Bohrer des zweiten Durchmessers kleiner als die Gesamtdicke der Platte ist.

Ein Wenden der Platte ist aber nicht zwingend erforderlich, da grundsätzlich auch mit beiden Bohrertypen bzw. Bohrerdurchmessern auch von ein und derselben Seite der Platte gebohrt werden kann, wobei dann aber die Bohrer des kleineren Durchmessers die Platte vollständig durchdringen müssen und die Bohrer des größeren Durchmessers die Platte nur teilweise durchdringen dürfen. Wird dagegen die Platte zwischen den Bohrvorgängen gewendet, müssen die Bohrer des kleineren Durchmessers, obwohl dies erlaubt ist, die Platte nicht unbedingt vollständig durchdringen, solange garantiert ist, dass eine Verbindung zu den Bohrungen des größeren Durchmessers entsteht.

Indem zur Herstellung eines schallabsorbierenden Paneels die Platte selbst bewegt wird, kann das Bohrerfeld stationär bleiben und bedeutend größer dimensioniert werden als es nach dem Stand der Technik möglich ist. Dadurch wird eine Verringerung der Zahl der Arbeitsprozesse, deren Beschleunigung, aber auch gleichzeitig eine erhöhte Flexibilität in der Gestaltung und eine Verbesserung der Herstellungsqualität ermöglicht, was insgesamt eine wesentlich schnellere und wirtschaftlichere Fertigung zur Folge hat. Insgesamt führt die erfindungsgemäße Lösung zu einer dramatischen Reduktion der maßgeblichen Herstellungskosten bei gleichzeitiger Erhöhung der Anpassungsmöglichkeiten zur maßgeschneiderten Erfüllung von Kundenwünschen. Indem ferner zur Herstellung eines mehrlagigen schallabsorbierenden Paneels auf eine mehrlagige Platte mit einer Trägerplatte und einer darauf angeordneten Beschichtung, die als Standardware frei im Handel erhältlich ist, zurückgegriffen werden kann, wird beim Hersteller des schallabsorbierenden Paneels das Verkleben der beiden Lagen, nachdem diese mit Löchern versehen worden sind, umgangen. Auf diese Weise besteht auch nicht mehr das Risiko, dass der zumindest auf eine der zu verklebenden Lagen aufgebrachte Kleber die gebohrten Löcher teilweise verschließt. Auch besteht nicht das Risiko, dass beim Verkleben der Beschichtung mit der Trägerplatte die beiden Lagen unabsichtlich mit einem Versatz zusammengefügt werden, wodurch die Löcher der einen Lage nicht mehr exakt mit den Löchern der anderen Lage fluchten bzw. korrespondieren. Im Gegenteil, ein Grundgedanke der Erfindung ist, dass Trägerplatte und Beschichtung von vorne herein fest miteinander verbunden am Herstellungsort des schallabsorbierenden Paneels angeliefert werden und dort die jeweiligen Löcher beidseitig in den Verbund eingebracht werden, so dass es weder zu einem Verschluss der Löcher durch Kleber noch zu einem unbeabsichtigten Versatz von Trägerplatte und Beschichtung kommen kann.

Ermöglicht wird die vorangehend beschriebene Art der Herstellung eines ein- oder mehrlagigen schallabsorbierenden Paneels durch das Vorsehen eines Tisches, der relativ zu einem Bohrerfeld, welches insbesondere feststehend, das heißt ortsfest, ist, bewegbar ist. Mit einem Bohrerfeld im Sinne der vorliegenden Erfindung ist ein Raster bzw. eine Matrix mit einer Vielzahl von in vorzugsweise mehreren Reihen angeordneten und vorzugsweise einzeln ansteuerbaren Bohrern gemeint. Es ist denkbar, dass das erfindungsgemäß verwendete Bohrerfeld mindestens zwei Reihen, insbesondere mindestens fünf Reihen, vorzugsweise mindestens neun Reihen von Bohrern aufweist, wobei in jeder Reihe mindestens 50, insbesondere mindestens 75, vorzugsweise mindestens 80 Bohrer vorgesehen sein können. Die Bohrer oder das Bohrerfeld können auch teilweise oder insgesamt winklig verstellbar sein, also in einem bestimmten Winkel zur Vertikalen ausrichtbar sein, so dass durch eine zum Bohrerfeld relative Bewegung der Platte, während diese parallel zum Bohrerfeld ausgerichtet bleibt, in diesem Winkel auch das Bohren von Löchern mit diesem Winkel ermöglicht wird. Alternativ oder zusätzlich kann auch der Tisch mit der Platte winklig verstellbar sein, also in einem bestimmten Winkel zur Horizontalen ausrichtbar sein, um winkligen Bohrungen zu erzielen. "Winklig" bedeutet in diesem Zusammenhang, dass die Bohrachsen nicht senkrecht zu der Plattenoberfläche verlaufen. Durch eine winklige Anordnung der Bohrer relativ zum Tisch und der Platte kann auch durch eine Bewegung oder Verstellung der Bohrer und/oder des Tisches bzw. der Platte während eines Bohrvorgangs das Bohren von trichterförmigen Löchern oder Hohlräumen erreicht werden.

Mit einem solchen Bohrerfeld können in einem einzigen Bohrhub mehrere 100 Löcher, beispielsweise mehr als 700 Löcher, gleichzeitig gebohrt werden. Dadurch ist es beispielsweise möglich, eine 3 m breite und 3,50 m lange Platte in weniger als 3 Minuten, vorzugsweise in weniger als 2,5 Minuten, auf einer Seite mit Löchern zu versehen. Dabei wird nach dem ersten Bohrvorgang die Platte wieder von dem Bohrerfeld wegbewegt und gewendet, so dass auch auf der anderen Seite Löcher gebohrt werden können.

Im Sinne der Erfindung umfasst der sogenannte erste Bohrvorgang des erfindungsgemäßen Herstellungsverfahrens das einmalige oder mehrmalige Bohren und der sogenannte zweite Bohrvorgang des erfindungsgemäßen Herstellungsverfahrens umfasst ein weiteres einmaliges oder mehrmaliges Bohren. Während des ersten Bohrvorganges einerseits und während des zweiten Bohrvorganges andererseits kann es in dem Fall, dass die mit Bohrungen zu versehende Fläche der Platte größer als das Bohrerfeld ist, notwendig sein, den Tisch mit der Platte mehrmals relativ zum Bohrerfeld zu bewegen, also mehrere Bohrhübe durchzuführen, wobei zwischen zwei Bohrhüben der Tisch mit der Platte parallel zum Bohrerfeld verschoben wird. Der erste Bohrvorgang und der zweite Bohrvorgang können also jeweils mehrere Bohrhübe aufweisen.

Das zuvor beschriebene Verfahren erlaubt es, ein schallabsorbierendes Paneel mit einem relativ geringen Aufwand aus Standardware in kürzester Zeit herzustellen. Durch das Verfahren werden nicht nur die Produktionskosten gesenkt, sondern auch die Erstellung individueller Bohrbilder ermöglicht.

Wie gesagt ist erfindungsgemäß vorgesehen, dass die Platte und das Bohrerfeld beim ersten Bohrvorgang so weit auf einander zu bewegt werden, dass die rotierenden Bohrer die Platte zumindest teilweise durchdringen. Vorzugsweise wird dabei, um die Bohrzeit zu minimieren, die Platte nicht, zumindest nicht vollständig, von den rotierenden Bohrern durchdrungen. Bei einer mehrlagigen Platte, bei der sich die Löcher zum Schalleintritt in einer ersten Lage der Platte, die insbesondere zum Bohrerfeld gerichtet ist, befinden sollen, ist es in diesem Verfahrensschritt also empfehlenswert, wenn die Eindringtiefe der rotierenden Bohrer der Dicke dieser ersten Lage der mehrlagigen Platte entspricht. Es ist aber auch gleichfalls möglich, dass die Eindringtiefe größer als die Dicke der ersten Lage der mehrlagigen Platte ist.

Beim zweiten Bohrvorgang sollen wie gesagt die Platte und das Bohrerfeld so weit aufeinander zu bewegt werden, dass die rotierenden Bohrer des zweiten Durchmessers die Platte ebenfalls zumindest teilweise durchdringen. Insbesondere können, nachdem die Platte gewendet wurde, auf diese Weise die Hohlräume zur Aufnahme des Schalls in einer zweiten Lage der Platte gebildet werden. Bei einer mehrlagigen Platte können, nach dem Wenden der Platte, die Platte und das Bohrerfeld so weit aufeinander zu bewegt werden, dass die rotierenden Bohrer die zweite Lage der Platte zumindest teilweise, vorzugsweise aber vollständig durchdringen. Hierbei kann die zweite Lage der Platte unmittelbar an die erste Lage der Platte angrenzen. Es können sich aber auch ein oder mehrere weitere Lagen zwischen der ersten Lage der Platte und der zweiten Lage der Platte befinden. Die erste Lage der Platte, zumindest die vollständige erste Lage der Platte, die die Schalleintrittslöcher aufweist, soll dabei, ebenfalls um die Bohrzeit auf ein Minimum zu verkürzen, vorzugsweise nicht durchdrungen werden. In diesem Verfahrensschritt ist es also empfehlenswert, dass die Eindringtiefe der rotierenden Bohrer der Dicke der zweiten Lage der Platte entspricht. Auch hier ist es theoretisch denkbar, dass die Eindringtiefe größer als die Dicke der zweiten Lage der Platte ist. In diesem Verfahrensschritt ist es ebenfalls denkbar, dass die Eindringtiefe der rotierenden Bohrer eines zweiten Durchmessers kleiner als die Gesamtdicke der Platte ist. Vorzugsweise bilden die durch die Ausnehmungen des zweiten Bohrvorgangs hergestellten Hohlräume einen Verbund mit den durch die Ausnehmungen des ersten Bohrschritts hergestellten Löchern. Insbesondere kann ein Hohlraum jeweils mit ein oder mehreren Löchern gefluchtet sein. Es kann also auch ratsam sein, bei einer mehrlagigen Platte jede Lage der Platte mindestens entweder im ersten Bohrschritt oder im zweiten Bohrschritt durchdringen zu lassen.

Da beim ersten Bohrvorgang Bohrer eines anderen Durchmessers zum Herstellen der Löcher verwendet werden können als beim zweiten Bohrvorgang, wobei der Durchmesser der im zweiten Bohrvorgang rotierenden Bohrer, vorzugsweise größer als im ersten Bohrvorgang ist, ist es grundsätzlich denkbar, dass zwischen dem ersten Bohrvorgang und dem zweiten Bohrvorgang - Bohrer des ersten Durchmessers gegen Bohrer des zweiten Durchmessers ausgetauscht werden, was grundsätzlich automatisch geschehen kann. Dies geschieht vorzugsweise in der Zeit, in der der Tisch mit der Platte nach dem erfolgten ersten Bohrvorgang vom Bohrerfeld wegbewegt und/oder während die Platte gewendet wird. Grundsätzlich ist es aber auch denkbar, dass das Bohrerfeld bereits zu Beginn von dem ersten Bohrvorgang, also von vorne herein, Bohrer des ersten Durchmessers und Bohrer des zweiten Durchmessers aufweist, wobei in dem ersten Bohrvorgang zumindest die Bohrer des zweiten Durchmessers und in dem zweiten Bohrvorgang zumindest die Bohrer des ersten Durchmessers deaktiviert sind. Eine Deaktivierung bedeutet insbesondere, dass im Bohrerfeld die deaktivierten Bohrer gegenüber den aktivierten Bohrern zurückgesetzt werden, das heißt nicht so weit aus dem Bohrerfeld hervorragen. Vorzugsweise sind die deaktivierten Bohrer auch nicht angetrieben. Wenn diese aber zurückgesetzt sind, ist es grundsätzlich auch denkbar, dass diese weiterhin angetrieben sind und rotieren. Insbesondere kann jeder Bohrer sowohl in seiner Rotation als auch darin, wie weit er aus dem Bohrerfeld hinausragt, einzeln ansteuerbar sein. Dadurch ist es möglich, einzustellen welche Bohrer bei jedem Bohrvorgang jeweils zum Einsatz kommen.

Gemäß einer beispielhaften Ausführungsform des erfindungsgemäßen Verfahrens findet die Rotation der Bohrer im Bohrerfeld, die Bewegung der Platte relativ zum Bohrerfeld, die Aktivierung und Deaktivierung einzelner Bohrer sowie das Zurücksetzen und das Vorsetzen von einzelnen Bohrern automatisch durch eine elektronische Datenverarbeitungsvorrichtung statt. Insbesondere können diese Einstellungen durch Einlesen einer entsprechend formatierten Datei erfolgen, welche die gewählten Einstellungen speichert.

Gemäß eines weiteren Ausführungsbeispiels des erfindungsgemäßen Verfahrens weist die Platte mindestens zwei Lagen auf. Die Platte kann eine Holzwerkstoffplatte sein, wobei jede der mindestens zwei Lagen aus Holzmaterial bestehen kann. Eine Lage kann aber auch aus einer Dekorbeschichtung oder einem Schichtstoff, insbesondere unter Verwendung von Furnier, Lack, CPL oder Melaminharz, bestehen.

Gemäß noch eines weiteren Ausführungsbeispiels des erfindungsgemäßen Verfahrens entspricht in dem ersten Bohrvorgang die Eindringtiefe der rotierenden Bohrer der Dicke einer ersten Lage der Platte und/oder in dem zweiten Bohrvorgang die Eindringtiefe der rotierenden Bohrer der Dicke einer zweiten Lage der Platte.

Gemäß wiederum einer weiteren Ausgestaltung des erfindungsgemäßen Verfahrens kann vorgesehen sein, dass in dem ersten Bohrvorgang einige der Bohrer des ersten Durchmessers und/oder in dem zweiten Bohrvorgang einige der Bohrer des zweiten Durchmessers deaktiviert sind. Auf diese Weise ist es möglich, beim Bohren einige Bereiche der Platte, nämlich dort, wo die jeweiligen Bohrer deaktiviert sind, auszusparen. In diesen Bereichen der Platte wird dann durch das Bohrerfeld kein Material entfernt, so dass hier beispielsweise ein stabiler Plattenrand oder stabile Aufhängepunkte für die Anbringung von Beschlägen übrig bleiben kann.

Gleichzeitig kann hierdurch die Palette der Gestaltungsmöglichkeiten des Lochbildes in der Deckschicht deutlich erweitert werden. Insbesondere werden individualisierte Bohrbilder und grafische Darstellungen ermöglicht, um bei vergleichbarem Absorptionsverhalten eine neue optische Qualität der Paneeloberflächen zu erzielen.

Gemäß einer weiteren Ausgestaltung des erfindungsgemäßen Verfahrens ist es durch Programmierung der einzelnen Bohrköpfe ferner möglich, im Rahmen des Bohrerrasters, vorzugsweise 4mm x 4mm, die unterschiedlichsten Lochbilder zu erzeugen. Denkbar und damit im Sinne der Erfindung sind graphische Darstellungen, Muster, 3D-Effekte, Bilder, Namenszüge, Logos, etc.

Gemäß noch einer weiteren Ausgestaltung des erfindungsgemäßen Herstellungsverfahrens ist das Raster der in dem ersten Bohrvorgang gebohrten Löcher auf das Raster der in dem zweiten Bohrvorgang gebohrten Löcher abgestimmt, insbesondere derart, dass mindestens ein in dem ersten Bohrvorgang gebohrtes Loch, vorzugsweise mindestens vier in dem ersten Bohrvorgang gebohrte Löcher, jeweils in ein in dem zweiten Bohrvorgang gebohrtes Loch münden. Dabei kann der Abstand der Bohrer untereinander beim zweiten Bohrvorgang so gewählt sein, dass er einem geraden Vielfachen des Bohrerabstands in dem ersten Bohrvorgang entspricht. Dabei ist es nicht zwingend notwendig, dass jedes der in dem ersten Bohrvorgang gebohrten Löcher auch in ein in dem zweiten Bohrvorgang gebohrtes Loch mündet. Einige der in dem ersten Bohrvorgang gebohrten Löcher können auch aus rein optischen Gründen vorgesehen werden. Durch das erfindungsgemäße Verfahren ist es aber grundsätzlich möglich, auf einfache Weise ein oder mehrere in dem ersten Bohrvorgang gebohrte Löcher so vorzusehen, dass diese in die vorzugsweise größeren in dem zweiten Bohrvorgang gebohrten Löcher der Platte münden.

Wie bereits zuvor angedeutet, werden nach dem ersten Bohrvorgang die Platte und das Bohrerfeld wieder auseinander bewegt, wobei die Platte in vertikaler Richtung von dem ortsfesten Bohrerfeld zunächst nach unten und dann vorzugsweise in horizontaler Richtung zur Seite weg bewegt wird, damit ein Wenden der Platte und/oder ein Bohrerwechsel ermöglicht wird. Damit beim Auseinanderbewegen von Platte und Bohrerfeld die Platte nicht in den Bohrern hängen bleibt, sind gemäß einer weiteren Ausgestaltung des erfindungsgemäßen Herstellungsverfahrens Haltemittel vorgesehen. Mit diesen Haltemitteln wird die Platte beim ersten und/oder beim zweiten Bohrvorgang gehalten. Insbesondere wird die Platte von den Haltemitteln beim Auseinanderbewegen von Platte und Bohrerfeld gehalten. Da eine Ansaugung der Platte von unten, das heißt auf der dem Bohrerfeld abgewandten Seite, zumindest nach dem zweiten Bohrvorgang möglicherweise nicht zuverlässig funktioniert, da aufgrund der vollständig durch die Platte hindurchgehenden Löcher kein ausreichender Saugdruck aufgebaut werden kann, ist es bevorzugt, dass die Platte mit Zylindern gegen den Tisch gedrückt wird. Die Zylinder bauen dabei einen vorzugsweise gleichmäßigen Druck auf, insbesondere derart, dass die Zylinder der Bewegung des Tisches, wenn dieser relativ zum Bohrerfeld bewegt wird, nachgeführt werden.

Wie zuvor erwähnt, ist es vorteilhaft, dass das Bohrerfeld ortsfest ist, wobei dieses dann vorzugsweise auf zwei Portalen bzw. Trägern aufgehängt ist, und zum Bohren der Tisch mit der Platte bewegbar ist. Um eine optimale Handhabung der Platte während und nach dem jeweiligen Bohrvorgang, insbesondere auch beim Wenden der Platte, zu gewährleisten, ist gemäß einer weiteren Ausgestaltung des erfindungsgemäßen Herstellungsverfahrens vorgesehen, dass der Tisch vor oder während der Durchführung des ersten Bohrvorgangs) und/oder des zweiten Bohrvorgangs parallel zur Ebene des Bohrerfelds in einer ersten Richtung und/oder in einer zweiten Richtung senkrecht zur ersten Richtung bewegt wird. Mit der Ebene des Bohrerfelds ist eine Ebene gemeint, die parallel zur Tischebene bzw. zur Plattenebene verläuft. Diese Ebene kann auch als horizontale Ebene definiert werden. So ist es denkbar, dass nach Auflegen der Platte auf den Tisch der Tisch zunächst eine Bewegung in einer ersten horizontalen Richtung durchführt und dadurch die Platte vertikal unter das Bohrerfeld gefahren wird. Anschließend kann eine Feinjustierung dadurch erfolgen, dass der Tisch in eine zweite horizontale Richtung senkrecht zur ersten horizontalen Richtung bewegt wird. Anschließend kann der Tisch in vertikaler Richtung in Richtung des Bohrerfelds bewegt werden. Nach dem ersten oder zweiten Bohrvorgang kann der Tisch vertikal abgesenkt werden und gegebenenfalls vor einem erneuten Bohren nochmals in der zweiten horizontalen Richtung, die senkrecht zur ersten horizontalen Richtung verläuft, versetzt werden. Auf diese Weise wird beim erneuten vertikalen Hochfahren eine zu den vorherigen Bohrungen versetzte Anordnung ermöglicht.

Es ist auch denkbar, dass bei einer winkligen Anordnung der Bohrköpfe oder für den Fall, dass ein oder mehrere Bohrköpfe des Bohrerfeldes winklig anstellbar sind, auch eine Bewegung des Tisches mit Platte in diesem Winkel zum Bohrerfeld hin und vom Bohrerfeld weg möglich ist. Auf diese Weise ist das Bohren von Löchern in die Platte möglich, welche winklig zur Oberfläche der Platte verlaufen, also nicht rechtwinklig zur Oberfläche der Platte stehen.

Gemäß noch einer weiteren Ausgestaltung des erfindungsgemäßen Herstellungsverfahrens kann in dem zweiten Bohrvorgang auf die Seite der Platte mit den größeren Löchern eine weitere Schicht, insbesondere eine Dekorschicht, vorzugsweise ein Vlies, aufgebracht werden. Ein solches Vlies bildet dann vorzugsweise den Abschluss auf der der ersten Lage der Platte gegenüber liegenden Seite des schallabsorbierenden Paneels. Es kann auch eine weitere Lage in Gestalt einer weiteren Holzschicht aufgebracht werden. Diese Holzschicht kann aus einer weiteren, insbesondere mehrlagigen Platte bestehen. Die weitere Platte kann aufgeklebt werden. Die weitere Platte kann vorbehandelt sein, insbesondere kann die weitere Platte gebohrte Löcher oder Hohlräume aufweisen und ebenfalls durch das erfindungsgemäße Herstellungsverfahren hergestellt worden sein.

Eine weitere Ausgestaltung des erfindungsgemäßen Herstellungsverfahrens sieht vor, dass neben der Herstellung von vorzugsweise homogenen Platten mit werkseitig aufgebrachter Dekorschicht auch die Herstellung von mehrschichtigen, schallabsorbierenden Platten mit hoher Effizienz auszuführen ist.

Dabei werden die einzelnen Verfahrensschritte wie zuvor beschrieben ausgeführt, hinzu kommt lediglich das Verbinden der einzelnen Schichten.

Im Sinne der Erfindung ist es somit möglich, durch Kombination von seriell vorgefertigten Halbzeugen genau auf die konkrete Einbausituation und die speziellen Anforderungen an das Absorptionsverhalten des jeweiligen Produkts abgestimmte Mehrschichtplatten mit individuellen Dekorlochungen zu erstellen, ohne das Preisniveau derzeitiger Standardprodukte zu verlassen.

Darüber hinaus ermöglicht die Erfindung auch die Herstellung von Platten, welche ein individuell gestaltetes Muster an Löchern aufweisen. Diese Platten können nicht nur zur Schalldämmung, sondern auch als optische Gestaltungselemente verwendet werden, insbesondere indem ein oder mehrere Lichtquellen auf der rückwärtigen Seite der Platte angebracht werden. Insbesondere ist das Muster von Löchern frei wählbar und kann auch künstlerisch gestaltet werden.

Es gibt nun eine Vielzahl von Möglichkeiten, das erfindungsgemäße Herstellungsverfahren auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: eine schematische Perspektivansicht einer Vorrichtung zur Anwendung eines Verfahrens zum Herstellen eines schallabsorbierenden Paneels gemäß der vorliegenden Erfindung,
- Fig. 2: eine untere Ansicht eines Bohrerfeldes der Vorrichtung in Fig. 1,
- Fig. 3: eine schematische Perspektivansicht eines schallabsorbierenden Paneels hergestellt gemäß der vorliegenden Erfindung,
- Fig. 4a-b: jeweils eine schematische Schnittansicht eines Paneels, wie es in Fig. 3 dargestellt ist, und
- Fig. 5a-h: jeweils eine schematische Schnittansicht eines nach einer Ausführungsform des erfindungsgemäßen Verfahrens hergestellten Paneels.

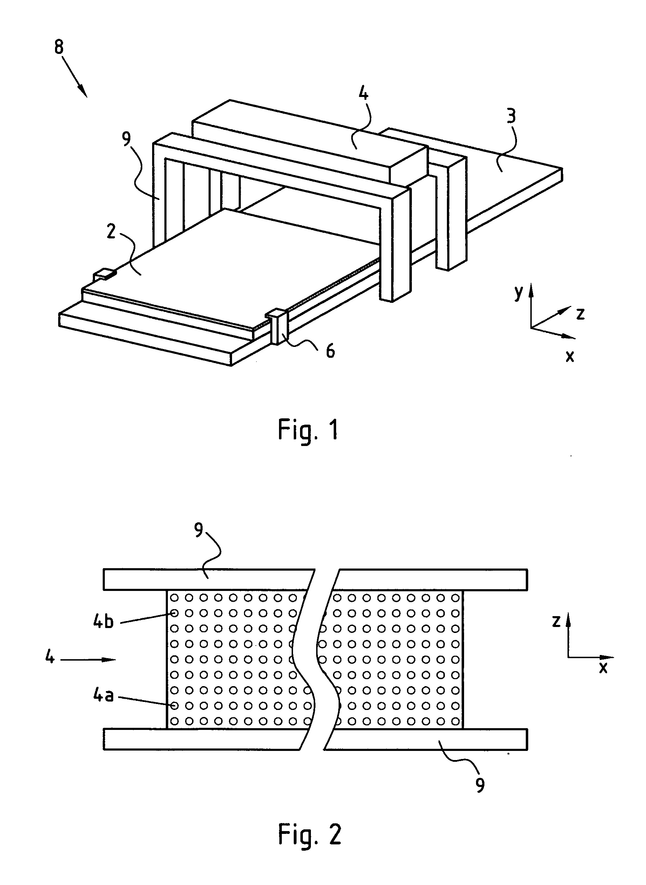

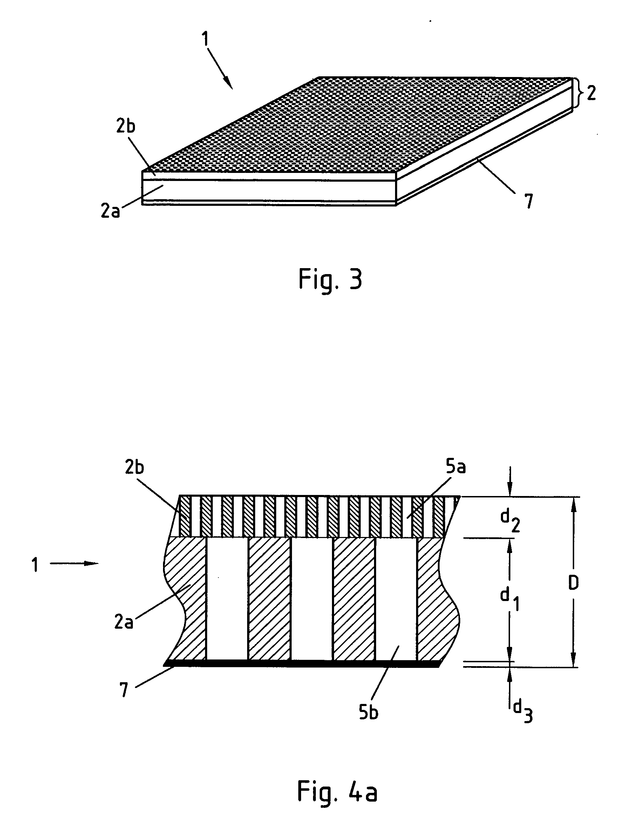

In Fig. 1 ist eine Vorrichtung 8 zur Anwendung des erfindungsgemäßen Verfahrens zur Herstellung eines schallabsorbierenden Paneels 1, wie es in Fig. 3 dargestellt ist, gezeigt. Die Vorrichtung 8 weist einen beweglichen Tisch 3 auf, der vertikal unter einem Bohrerfeld 4, welches an zwei Portalen 9 befestigt ist, angeordnet ist. Das Bohrerfeld 4 ist feststehend, das heißt ortsfest, wobei jeder einzelne der in Fig. 2 gezeigten Bohrer 4a und 4b des Bohrerfeldes 4 individuell aktiviert und deaktiviert werden kann. Eine Aktivierung bedeutet, dass der Bohrer rotiert, wohingegen eine Deaktivierung bedeutet, dass der Bohrer gegenüber den aktivierten Bohrern zurückgesetzt ist und vorzugsweise nicht angetrieben wird.

Auf dem Tisch 3 befindet sich in Fig. 1 eine frei im Handel erhältliche Platte 2, die eine eine erste Lage bestehend aus einer Trägerplatte 2a und eine darauf aufgebrachte zweite Lage bestehend aus einer Beschichtung bzw. Dekorschicht 2b z.B. aus Melaminharz-getränkten Papieren aufweist. In dem in Fig. 1 gezeigten Zustand weist die Platte 2 noch keinerlei Löcher auf.

Die Platte 2 wird von hier schematisch dargestellten Haltemitteln 6 am Tisch 3 fixiert.

Der Tisch 3 wird vor dem jeweiligen Bohrvorgang zunächst in horizontaler Richtung z und gegebenenfalls in horizontaler Richtung x so verfahren, bis das Bohrerfeld 4, das heißt die für diesen Bohrvorgang aktivierten Bohrer 4a bzw. 4b, oberhalb des Bereichs angeordnet ist, in welchem die Bohrlöcher in der Platte 2 vorgesehen werden sollen. Der Tisch 3 wird dann mit der Platte 2 in vertikaler Richtung y so weit in Richtung des Bohrerfeldes 4 verfahren, bis die aktivierten Bohrer 4a bzw. 4b in die Platte 2 eindringen. Anschließend wird der Tisch wieder vertikal abgesenkt und in horizontaler Richtung wieder in die in Fig. 1 dargestellte Position bewegt. Nach dem ersten Bohrvorgang, der mehrere aufeinanderfolgende Bohrhübe aufweisen kann, kann in dieser Position die Platte gewendet und nach dem zweiten Bohrvorgang, der ebenfalls mehrere aufeinanderfolgende Bohrhübe aufweisen kann, entfernt werden.

Fig. 2 zeigt das Bohrerfeld 4 in einer Ansicht von unten, wobei hier verschiedene Bohrer 4a und 4b erkennbar sind, die für den jeweils ersten Bohrvorgang bzw. den zweiten Bohrvorgang einzeln aktiviert werden können. Das Bohrerfeld umfasst in diesem Beispiel 9 Reihen mit jeweils 80 Bohrern.

Fig. 3 zeigt ein durch das erfindungsgemäße Herstellungsverfahren erhaltenes schallabsorbierendes Paneel 1, welches als Mittellage eine Trägerplatte 2a einer Dicke d1 und als obere Decklage eine Melaminharzbeschichtung 2b einer Dicke d2 aufweist, wobei die Summe der Einzeldicken d1 und d2 der Gesamtdicke D der ursprünglichen Platte 2 entspricht. Ein Vlies 7 einer Dicke d3 bildet den unterseitigen Abschluss des schallabsorbierenden Paneels 1.

Fig. 4a zeigt einen Querschnitt durch das schallabsorbierende Paneel 1. In diesem Querschnitt ist erkennbar, dass die oberseitige Beschichtung 2b eine Vielzahl von Löchern 5a eines kleinen Durchmessers und die Trägerplatte 2a eine geringere Anzahl von Hohlräumen 5b eines größeren Durchmessers aufweist. Die Hohlräume dienen zur Aufnahme und Dämpfung des Schalls welcher durch die Löcher 5a in die Hohlräume 5b tritt. Dabei ist das Raster der Löcher 5a auf das Raster der Hohlräume 5b derart abgestimmt, dass genau vier Löcher 5a (im Schnitt sind nur zwei der Löcher 5a erkennbar) in jeweils einen Hohlraum 5b münden. Von den Löchern 5a münden allerdings nicht alle in die Hohlräume 5b der Trägerplatte 2a. Die Abstände zwischen den Löchern 5a und den Hohlräume 5b sind jeweils so gewählt, dass einige der Löcher 5a auch im Material der Trägerplatte 2a enden.

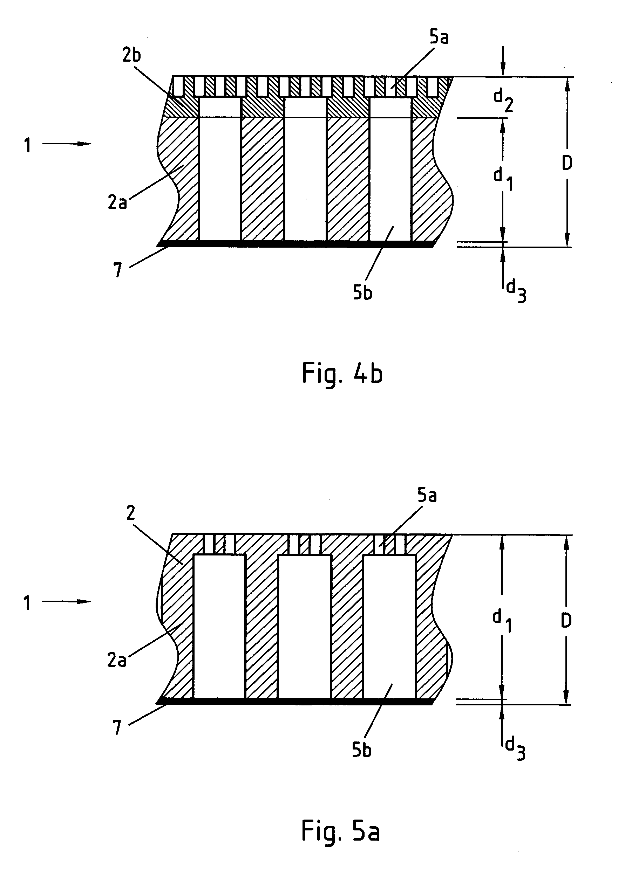

Fig. 4b zeigt einen Querschnitt durch ein weiteres schallabsorbierendes Paneel 1. Die oberseitige Beschichtung 2b weist eine Vielzahl von Löchern 5a eines kleinen Durchmessers auf, wobei die Tiefe der Löcher 5a geringer ist als die Dicke d2 der oberseitigen Beschichtung 2b. Eine Trägerplatte 2a weist eine geringere Anzahl von Hohlräumen 5b eines größeren Durchmessers auf. Die Tiefe der Hohlräume 5b ist größer als die Dicke d1 der Trägerplatte, so dass die Hohlräume 5b auch teilweise in dem Bereich der oberseitigen Beschichtung 2b gebildet sind.

Fig. 5a zeigt einen Querschnitt durch ein nach einer weiteren Ausführungsform des erfindungsgemäßen Verfahrens hergestelltes Paneel 1. Eine einlagige Platte 2 einer Dicke d1 weist eine Vielzahl von Löchern 5a eines kleinen Durchmessers und eine geringere Anzahl von Hohlräumen 5b eines größeren Durchmessers auf. Von den Löchern 5a münden nicht alle in die Hohlräume 5b der einlagigen Platte 2a. Die Hohlräume 5b haben eine Abstand zueinander, welcher geringer ist als der Durchmesser 5b der Hohlräume. Ein Vlies 7 einer Dicke d3 bildet den unterseitigen Abschluss des schallabsorbierenden Paneels 1.

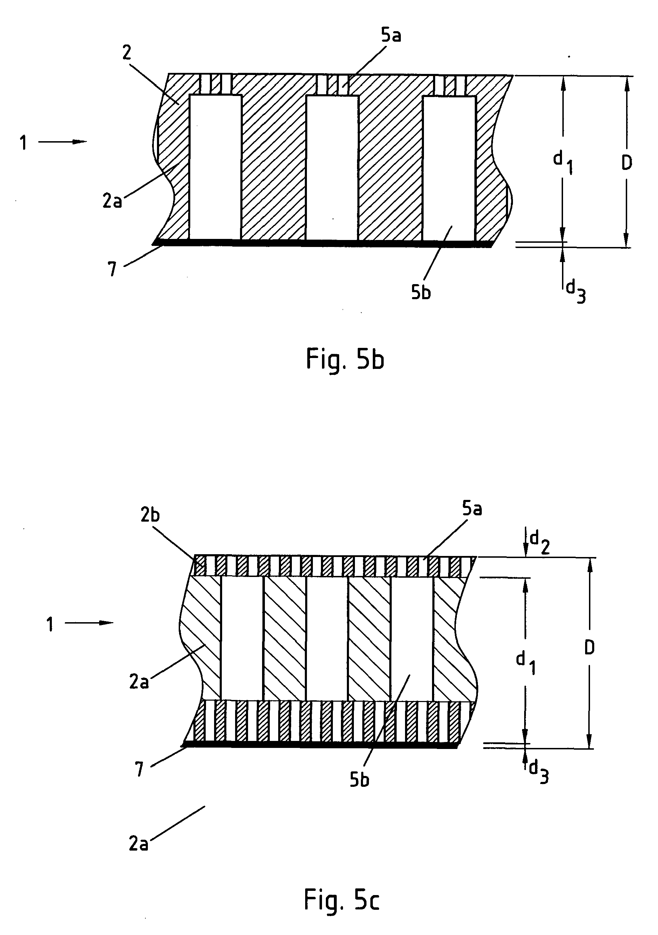

Fig. 5b zeigt einen Querschnitt durch ein nach noch einer weiteren Ausführungsform des erfindungsgemäßen Verfahrens hergestelltes Paneel 1. Eine einlagige Platte 2 einer Dicke d1 weist eine Vielzahl von Löchern 5a eines kleinen Durchmessers und eine geringere Anzahl von Hohlräumen 5b eines größeren Durchmessers auf. Die Hohlräume 5b sind, im Unterschied zu der Fig. 5a, in einem Abstand zueinander angeordnet, welcher größer als der Durchmesser der Hohlräume 5b ist. Von den Löchern 5a münden nicht alle in die Hohlräume 5b der einlagigen Platte 2. Ein Vlies 7 einer Dicke d3 bildet den unterseitigen Abschluss des schallabsorbierenden Paneels 1.

Fig. 5c zeigt einen Querschnitt durch ein nach noch einer weiteren Ausführungsform des erfindungsgemäßen Verfahrens hergestelltes Paneel 1. Die oberseitige Beschichtung 2b weist eine Vielzahl von Löchern 5a eines kleinen Durchmessers auf. Eine Trägerplatte 2a weist eine geringere Anzahl von Hohlräumen 5b eines größeren Durchmessers auf. Die unterseitige Beschichtung 2c weist eine Vielzahl von Löchern 5c mit einem ebenfalls kleinen Durchmesser auf. Von den Löchern 5a und den Löchern 5c münden nicht alle in die Hohlräume 5b der Trägerplatte 2a. Die Hohlräume 5b sind in einem Abstand zueinander angeordnet, welcher größer als der Durchmesser der Hohlräume 5b ist. Ein Vlies 7 einer Dicke d3 bildet den unterseitigen Abschluss des schallabsorbierenden Paneels 1.

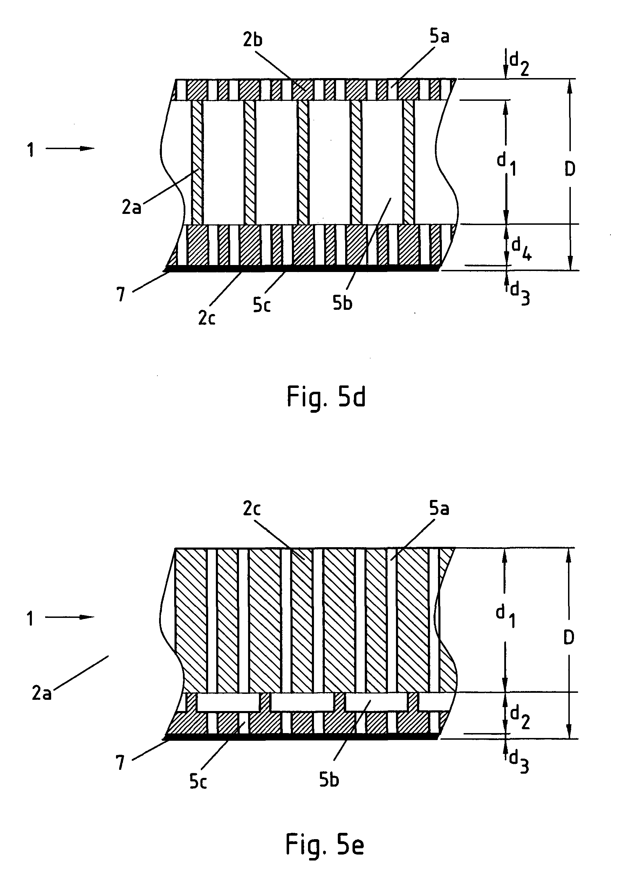

Fig. 5d zeigt einen Querschnitt durch ein nach noch einer weiteren Ausführungsform des erfindungsgemäßen Verfahrens hergestelltes Paneel 1. Das Paneel unterscheidet sich von dem in Fig. 5c dargestellten Paneel dadurch, dass die Hohlräume 5b in einem Abstand zueinander angeordnet sind, welcher kleiner als der Durchmesser der Hohlräume 5b ist.

Fig. 5e zeigt einen Querschnitt durch ein nach noch einer weiteren Ausführungsform des erfindungsgemäßen Verfahrens hergestelltes Paneel 1. Eine obere Platte 2c einer Dicke d2. weist eine Vielzahl von Löchern 5a eines kleinen Durchmessers auf. Eine Trägerplatte 2a einer Dicke d1, welche kleiner ist als die Dicke d2, weist eine geringere Anzahl von Hohlräumen 5b eines größeren Durchmessers auf. Die Hohlräume 5b haben eine Tiefe, welche geringer als die Dicke d1 ist. Ferner weist die Trägerplatte 2a eine Vielzahl von Löchern 5c eines kleinen Durchmessers auf, die zumindest teilweise in die Hohlräume 5b münden. Ein Vlies 7 einer Dicke d3 bildet den unterseitigen Abschluss des schallabsorbierenden Paneels 1.

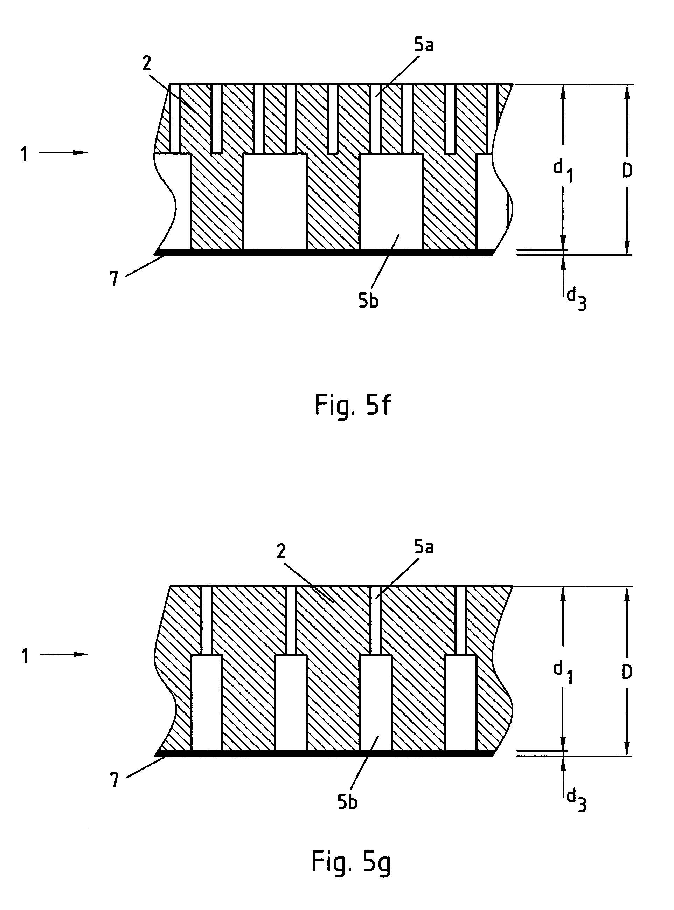

Fig. 5f zeigt einen Querschnitt durch ein nach noch einer weiteren Ausführungsform des erfindungsgemäßen Verfahrens hergestelltes Paneel 1. Eine einlagige Platte 2 einer Dicke d1 weist eine Vielzahl von Löchern 5a eines kleinen Durchmessers und eine geringere Anzahl von Hohlräumen 5b eines größeren Durchmessers auf. Die Hohlräume 5b sind in einem Abstand zueinander angeordnet, welcher größer als der Durchmesser der Hohlräume 5b ist. Einige der Löcher 5a sind in einem frei gestalteten Muster unabhängig von der Position der Hohlräume 5b platziert. Ein Vlies 7 einer Dicke d3 bildet den unterseitigen Abschluss des schallabsorbierenden Paneels 1.

Fig. 5g zeigt einen Querschnitt durch ein nach noch einer weiteren Ausführungsform des erfindungsgemäßen Verfahrens hergestelltes Paneel 1. Eine einlagige Platte 2 einer Dicke d1 weist eine Vielzahl von Löchern 5a eines kleinen Durchmessers und eine eben so große Vielzahl von Hohlräumen 5b eines größeren Durchmessers auf. Jedes der Löcher 5a mündet in einen der Hohlräume 5b. Ein Vlies 7 einer Dicke d3 bildet den unterseitigen Abschluss des schallabsorbierenden Paneels 1.

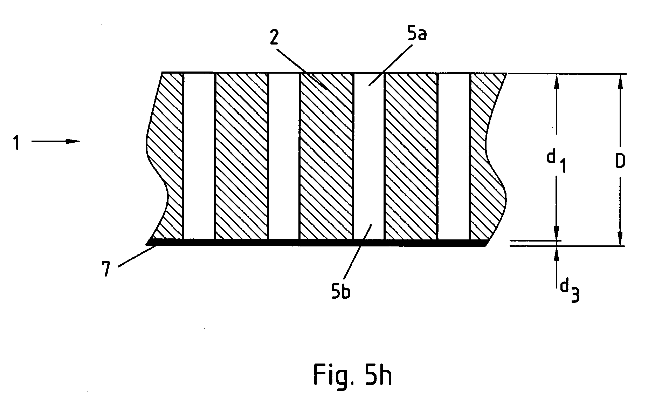

Fig. 5h zeigt einen Querschnitt durch ein nach noch einer weiteren Ausführungsform des erfindungsgemäßen Verfahrens hergestelltes Paneel 1. Eine einlagige Platte 2 einer Dicke d1 weist eine Vielzahl von Löchern 5 eines kleinen Durchmessers auf welche die einlagige Platte 2 vollständig durchdringen. Ein Vlies 7 einer Dicke d3 bildet den unterseitigen Abschluss des schallabsorbierenden Paneels 1.

## Patentansprüche

1. Verfahren zum Herstellen eines schallabsorbierenden Paneels, bei dem nacheinander die folgenden Schritte durchgeführt werden:
- Bereitstellen einer Platte (2),
- Auflegen der Platte (2) auf einen Tisch (3), und
- Durchführen eines ersten Bohrvorganges umfassend das Bewegen des Tisches (3) mit der Platte (2) hin zu einem Bohrerfeld (4) mit einer Vielzahl von Bohrern (4a,4b), während zumindest ein Teil der Bohrer (4a) eines ersten Durchmessers rotiert, wobei der Tisch (3) vertikal unterhalb des Bohrerfeldes (4) angeordnet ist,
wobei die Platte (2) so weit in
Richtung des Bohrerfeldes (4) bewegt wird, dass die rotierenden Bohrer (4a) des ersten Durchmessers die Platte (2) zumindest teilweise durchdringen, während das Bohrerfeld (4) stationär bleibt.

2. Verfahren nach Anspruch 1, **dadurch gekennzeichnet, dass** ferner ein zweiter Bohrvorgang durchgeführt wird umfassend das Bewegen des Tisches (3) mit der Platte (2) relativ zum Bohrerfeld (4), während zumindest ein Teil der Bohrer (4b) eines zweiten Durchmessers rotiert, wobei die Platte (2) so weit in Richtung des Bohrerfeldes (4) bewegt wird, dass die rotierenden Bohrer (4b) des zweiten Durchmessers die Platte (2) zumindest teilweise durchdringen.

3. Verfahren nach Anspruch 2, **dadurch gekennzeichnet, dass** die Platte (2) zwischen dem ersten und dem zweiten Bohrvorgang gewendet wird.

4. Verfahren nach einem der vorangehenden Ansprüche, **dadurch gekennzeichnet, dass** die Platte (2) mindestens zwei Lagen (2a,2b) aufweist und insbesondere in dem ersten Bohrvorgang die Eindringtiefe der rotierenden Bohrer (4a) des ersten Durchmessers der Dicke (d2) einer ersten Lage der Platte (2b) entspricht und/oder in dem zweiten Bohrvorgang die Eindringtiefe der rotierenden Bohrer (4b) des zweiten Durchmessers der Dicke (d1) einer zweiten Lage der Platte (2a) entspricht.

5. Verfahren nach einem der Ansprüche 2 bis 4, **dadurch gekennzeichnet, dass** das Bohrerfeld (4) bereits zu Beginn des ersten Bohrvorgangs Bohrer (4a) des ersten Durchmessers und Bohrer (4b) des zweiten Durchmessers aufweist, wobei in dem ersten Bohrvorgang zumindest die Bohrer (4b) des zweiten Durchmessers und in dem zweiten Bohrvorgang zumindest die Bohrer (4a) des ersten Durchmessers deaktiviert sind.

6. Verfahren nach einem der vorangehenden Ansprüche, **dadurch gekennzeichnet, dass** in dem ersten Bohrvorgang einige der Bohrer (4a) des ersten Durchmessers und/oder in dem zweiten Bohrvorgang einige der Bohrer (4b) des zweiten Durchmessers deaktiviert sind.

7. Verfahren nach einem der Ansprüche 2 bis 6, **dadurch gekennzeichnet, dass** das Raster der in dem ersten Bohrvorgang gebohrten Löcher (5a) auf das Raster der in dem zweiten Bohrvorgang gebohrten Löcher (5b) abgestimmt ist, insbesondere derart, dass mindestens ein in dem ersten Bohrvorgang gebohrtes Loch (5a), vorzugsweise mindestens vier in dem ersten Bohrvorgang gebohrte Löcher (5a), in jeweils ein in dem zweiten Bohrvorgang gebohrtes Loch (5b) münden.

8. Verfahren nach einem der vorangehenden Ansprüche, **dadurch gekennzeichnet, dass** die Platte (2) in dem ersten Bohrvorgang und/oder in dem zweiten Bohrvorgang von Haltemitteln (6) gehalten wird.

## Claims

1. A method for producing a sound-absorbing panel, in which the following steps are carried out successively:
- provision of a board (2),
- placing the board (2) onto a table (3), and
- carrying out a first drilling process comprising the movement of the table (3) with the board (2) towards a drill field (4) having a plurality of drills (4a, 4b), while at least some of the drills (4a) of a first diameter rotate, the table (3) being arranged vertically below the drill field (4),
wherein the board (2) being moved so far in the direction of the drill field (4) that the rotating drills (4a) of the first diameter at least partially penetrate the board (2), while the drill field (4) remains stationary.

2. The method according to claim 1, **characterised in that** furthermore a second drilling process is carried out comprising the movement of the table (3) with the board (2) relative to the drill field (4), while at least some of the drills (4b) of a second diameter rotate, the board (2) being moved so far in the direction of the drill field (4) that the rotating drills (4b) of the second diameter at least partially penetrate the board (2).

3. The method according to claim 2, **characterised in that** the board (2) is turned between the first and second drilling process.

4. The method according to any one of the preceding claims, **characterised in that** the board (2) has at least two layers (2a, 2b) and in particular in the first drilling process the penetration depth of the rotating drills (4a) of the first diameter corresponds to the thickness (d2) of a first layer of the board (2b) and/or in the second drilling process the penetration depth of the rotating drills (4b) of the second diameter corresponds to the thickness (d1) of a second layer of the board (2a).

5. The method according to one of claims 2 to 4, **characterised in that** the drill field (4) at the start of the first drilling process has drills (4a) of the first diameter and drills (4b) of the second diameter, wherein at least the drills (4b) of the second diameter are deactivated in the first drilling process and at least the drills (4a) of the first diameter are deactivated in the second drilling process.

6. The method according to any one of the preceding claims, **characterised in that** some of the drills (4a) of the first diameter are deactivated in the first drilling process and/or some of the drills (4b) of the second diameter are deactivated in the second drilling process.

7. The method according to one of claims 2 to 6, **characterised in that** the grid of the holes (5a) drilled in the first drilling process is matched to the grid of the holes (5b) drilled in the second drilling process, in particular in such a manner that at least one hole (5a) drilled in the first drilling process, preferably at least four holes (5a) drilled in the first drilling process, open into in each case one hole (5b) drilled in the second drilling process.

8. The method according to any one of the preceding claims, **characterised in that** the board (2) is held by holding means (6) in the first drilling process and/or in the second drilling process.

## Revendications

1. Procédé pour la fabrication d'un panneau d'isolation acoustique, dans lequel les étapes suivantes sont exécutées les unes après les autres :
- mise à disposition d'une plaque (2),
- disposition de la plaque (2) sur une table (3), et
- exécution d'une première opération de perçage comprenant le déplacement de la table (3) avec la plaque (2) vers un champ de perceuses (4) avec plusieurs perceuses (4a, 4b), pendant qu'au moins une partie des perceuses (4a) présentant un premier diamètre est en rotation, la table (3) étant agencée verticalement sous le champ de perceuses (4),
dans lequel la plaque (2) est déplacée dans la direction du champ de perceuses (4) jusqu'à ce que les perceuses (4a) en rotation présentant le premier diamètre traversent au moins partiellement la plaque (2), pendant que le champ de perceuses (4) reste immobile.

2. Procédé selon la revendication 1, **caractérisé en ce qu'**une deuxième opération de perçage est en outre exécutée, comprenant le déplacement de la table (3) avec la plaque (2) par rapport au champ de perceuses (4), pendant qu'au moins une partie des perceuses (4b) présentant un deuxième diamètre est en rotation, dans lequel la plaque (2) est déplacée dans la direction du champ de perceuses (4) jusqu'à ce que les perceuses en rotation (4b) présentant le deuxième diamètre traversent au moins partiellement la plaque (2).

3. Procédé selon la revendication 2, **caractérisé en ce que** la plaque (2) est tournée entre la première et la deuxième opération de perçage.

4. Procédé selon l'une des revendications précédentes, **caractérisé en ce que** la plaque (2) comporte au moins deux couches (2a, 2b) et en particulier pendant la première opération de perçage la profondeur d'insertion des perceuses en rotation (4a) présentant le premier diamètre correspond à l'épaisseur (d2) d'une première couche de la plaque (2b) et/ou pendant la deuxième opération de perçage la profondeur d'insertion des perceuses en rotation (4b) présentant le deuxième diamètre correspond à l'épaisseur (d1) d'une deuxième couche de la plaque (2a).

5. Procédé selon l'une des revendications 2 à 4, **caractérisé en ce que** dès le début de la première opération de perçage, le champ de perceuses (4) comporte des perceuses (4a) présentant le premier diamètre et des perceuses (4b) présentant le deuxième diamètre, sachant qu'au moins les perceuses (4b) présentant le deuxième diamètre sont désactivées pendant la première opération de perçage et au moins les perceuses (4a) présentant le premier diamètre sont désactivées pendant la deuxième opération de perçage.

6. Procédé selon l'une des revendications précédentes, **caractérisé en ce que** pendant la première opération de perçage, quelques-unes des perceuses (4a) présentant le premier diamètre sont désactivées, et/ou pendant la deuxième opération de perçage, quelques-unes des perceuses (4b) présentant le deuxième diamètre sont désactivées.

7. Procédé selon l'une des revendications 2 à 6, **caractérisé en ce que** le quadrillage des trous (5a) percés pendant la première opération de perçage est adapté au quadrillage des trous (5b) percés pendant la deuxième opération de perçage, en particulier de manière à ce qu'au moins un trou (5a) percé pendant la première opération de perçage, de préférence au moins quatre trous (5a) percés pendant la première opération de perçage, débouchent respectivement sur un trou (5b) percé pendant la deuxième opération de perçage.

8. Procédé selon l'une des revendications précédentes, **caractérisé en ce que** la plaque (2) est maintenue par des éléments de maintien (6) pendant la première opération de perçage et/ou pendant la deuxième opération de perçage.
